# EUROPÄISCHE PATENTSCHRIFT

(11) **EP 2 898 381 B1**
(45) Veröffentlichungstag und Bekanntmachung des Hinweises auf die Patenterteilung: **30.11.2016**
(21) Anmeldenummer: 13753325.3
(22) Anmeldetag: 28.08.2013
(51) Int. Cl.: G05D 1/10

(54) **VERFAHREN ZUR FLUGROUTENBERECHNUNG UNTER BERÜCKSICHTIGUNG STRAHLENDOSIS-RELEVANTER EREIGNISSE**
METHOD FOR THE CALCULATION OF FLIGHT PATHS TAKING INTO CONSIDERATION EVENTS OF RELEVANCE FOR RADIATION DOSE
PROCÉDÉ DE CALCUL D'UN ITINÉRAIRE DE VOL TENANT COMPTE D'ÉVÉNEMENTS SIGNIFICATIFS POUR LES DOSES DE RADIATION

(30) Priorität: 21.09.2012 DE 102012217038
(43) Veröffentlichungstag der Anmeldung: 29.07.2015
(73) Patentinhaber: Deutsches Zentrum für Luft- und Raumfahrt e.V., 51147 Köln (DE)
(72) Erfinder: MATTHIÄ, Daniel, 50969 Köln (DE); MEIER, Matthias, 53639 Königswinter (DE); WIRTZ, Michael, 50678 Köln (DE)
(74) Vertreter: dompatent von Kreisler Selting Werner - Partnerschaft von Patent- und Rechtsanwälten mbB
(86) Internationale Anmeldenummer: PCT/EP2013/067843
(87) Internationale Veröffentlichungsnummer: WO 2014/044511

(56) Entgegenhaltungen:
- EP-A1- 0 671 637
- US-A1- 2001 053 617

## Beschreibung

Die vorliegende Erfindung betrifft ein Verfahren zur Flugroutenberechnung unter Berücksichtigung Strahlendosis-relevanter Ereignisse.

Die Strahlungsexposition auf Reiseflughöhen der Zivilluftfahrt (FL280 - FL410) ist aufgrund der galaktischen-kosmischen Strahlung im Vergleich mit terrestrischen Expositionen um bis zu einem Faktor 100 erhöht. Weiterhin besteht eine starke Abhängigkeit des Strahlungsfeldes von der lokalen Abschirmwirkung des Erdmagnetfeldes, beispielsweise parametrisiert durch den geomagnetischen Breitengrad. Einen weiteren Einfluss auf das Strahlungsfeld hat die Variation des interplanetaren Magnetfelds durch den solaren Zyklus. Diese verschiedenen unabhängigen Einflüsse führen zu einem in Komposition und Energieverteilung sehr komplexen Strahlungsfeld auf Reiseflughöhen. EP 0 671 637 A1 offenbart ein Verfahren, bei dem an Bord eines Flugzeuges Strahlungsdaten der atmosphärischen Strahlung aufgenommen werden und daraus die von der Flughöhe und der Position eines Flugzeugs abhängige Zusammensetzung des Gesamtspektrums abgeschätzt wird, um eine tatsächliche Dosis abzuschätzen.

Neben der galaktischen-kosmischen Strahlung gibt es weitere zeitweise Strahlungsbeiträge zu dem Strahlungsfeld, die durch solare oder galaktische Ereignisse erzeugt werden. Beispielsweise gibt es innerhalb des solaren Zyklus derartige temporäre Strahlungsbeiträge durch die solare kosmische Strahlung, wenn durch Strahlungsausbrüche auf der Sonne, sogenannte SPEs (englische Abkürzung für solar particle events), Teilchen erzeugt werden, die energiereich genug sind, um die Magnetosphäre und die oberen Schichten der Atmosphäre durchdringen zu können.

Das Auftreten von Strahlungsausbrüchen auf der Sonne, die zu einer zusätzlichen Strahlungsexposition auf Reiseflughöhen führen können, ist mit den gegenwärtigen Methoden nicht zuverlässig vorhersagbar. Dies liegt daran, dass nur die hochenergetische Komponente (> 500 MeV/n) der bei einem solaren nur die hochenergetische Komponente (> 500 MeV/n) der bei einem solaren Strahlungsausbruch emittierten Teilchen hinreichend tief genug in die Atmosphäre eindringen kann. Diese hochenergetischen Teilchen sind jedoch so schnell, dass sie gegenüber der bei Strahlungsausbrüchen ferner emittierten optischen bzw. Röntgenstrahlung nur um wenige Minuten verzögert die Erde erreichen. Entsprechende dosisreduzierende Maßnahmen, wie beispielsweise eine geomagnetisch stärker abgeschirmte Flugroute oder geringere Flughöhen, können daher aufgrund fehlender Informationen bei der Flugplanung im Einzelfall nicht berücksichtigt werden. Eine generelle Planung mit solchen Maßnahmen wäre hingegen aufgrund des damit verbundenen erhöhten Treibstoffverbrauchs unwirtschaftlicher und hinsichtlich der entsprechend höheren Schadstoffemissionen auch ökologisch bedenklich.

In Ermangelung der Hervorsagbarkeit Dosis-relevanter solarer Strahlungsausbrüche können derartige Ereignisse erst nach der damit verbundenen Erhöhung der Strahlungsintensität erkannt werden. Dies ist grundsätzlich durch direkte und indirekte Messmethoden möglich. Im Bereich der Luftfahrt ist es beispielsweise möglich, die mit der Strahlenexposition auf Reiseflughöhen verbundene Dosisrate, sowohl die Energiedosisrate dD/dt als auch die Umgebungsäquivalentdosisrate dH*(10)/dt mit dafür geeigneten Dosimetern direkt in einem Luftfahrzeug zu messen. In der Vergangenheit haben die mittels Dosimeter ermittelten Dosisraten während eines Fluges aufgrund von solaren Ereignissen mit temporären Expositionserhöhung jedoch teilweise zu kritischen Situationen geführt, da der Luftfahrzeugführer ungeplante Flugroutenänderungen vorgenommen hat bzw. die Flughöhe reduziert hat, um die Strahlungsexposition zu verringern, was zu einem deutlich erhöhten Treibstoffverbrauch führte.

Die in einem Flugzeug in Bezug auf temporäre Expositionserhöhung angezeigten Informationen sind jedoch auf die jeweilige Position des Flugzeugs bezogen, d.h., dass es der Anzeige der Dosisratenmessgeräte beispielsweise nicht zu entnehmen ist, wie sich die Dosisrate bei Reduktion der Flughöhe bzw. Ausweichen auf eine südlichere Route verändern würde. Diese Unvorhersagbarkeit der räumlichen Verteilung der Dosisrate bei Strahlungsausbrüchen ist darin begründet, dass diese im Wesentlichen vom primären Teilchenfluss und seiner Einfallsrichtung sowie Energieverteilung abhängt, welche jedoch der Beobachtung mit einem flugzeuggestützten Messgerät alleine nicht zugänglich ist. Die Determinanten der Dosisratenverteilung zeigen eine starke Abhängigkeit vom jeweiligen Einzelereignis und können über einen weiten Bereich variieren, so dass eine Betrachtung verallgemeinerter Parameter nicht möglich ist.

Ein Luftfahrzeugführer verfügt darüber hinaus in der Regel während eines Fluges nicht über hinreichende Informationen, ob der Flug zum geplanten Ziel bei einer Veränderung von Flugroute und/oder Flughöhe überhaupt noch durchführbar ist, beispielsweise aufgrund von Treibstoffbeschränkungen. Sinnvolle Handlungsoptionen sind über die direkt im Luftfahrzeug gemessenen Strahlungsdaten daher nicht vorhanden.

Eine Reduzierung der Strahlungsexposition in der Luftfahrt ist jedoch aufgrund der Dosisreduzierung gemäß § 94 StrlSchV und für eine sinnvolle Umsetzung des ALARA-Prinzips (as low as reasonably achievable) in der Luftfahrt wünschenswert.

Es ist daher die Aufgabe der vorliegenden Erfindung, ein Verfahren zur Flugroutenberechnung unter Berücksichtigung Strahlendosis-relevanter Ereignisse bereit zu stellen.

Die Erfindung ist definiert durch die Merkmale des Anspruchs 1.

Erfindungsgemäß ist vorgesehen, dass bei dem Verfahren zur Flugroutenberechnung unter Berücksichtigung Strahlendosis-relevanter Ereignisse folgende Schritte durchgeführt werden:
a) Aufnahme von Strahlungsdaten der atmosphärischen Strahlung,
b) Überprüfen der Strahlungsdaten und Schließen auf ein Strahlendosis-relevantes Ereignis, das eine temporäre Expositionserhöhung erzeugt,
c) Erstellen eines Modells anhand der Strahlungsdaten, wobei das Modell zumindest eine Abschätzung der räumlichen Lage eines Bereichs mit einer durch das Strahlendosis-relevante Ereignis erhöhten Strahlungsintensität enthält,
d) Ermittlung von flugrelevanten Parametern,
e) Berechnung einer im Hinblick auf die flugrelevanten Parameter möglichen Flugroute unter Berücksichtigung des in Schritt c) erstellten Modells, wobei die Flugroute in Bezug auf eine Reduzierung einer Strahlungsexposition angepasst wird.

Das erfindungsgemäße Verfahren ermöglicht somit Strahlendosis-relevante Ereignisse, beispielsweise solare oder galaktische Ereignisse wie beispielsweise Strahlungsausbrüche auf der Sonne, zeitnah zu erkennen und anhand eines entsprechend an die Charakteristika des Strahlungsausbruch angepassten Modells die Möglichkeit einer Einhaltung vorgegebener Strahlungslevel unter Berücksichtigung der flugrelevanten Parameter zu berechnen und somit dem Luftfahrzeugführer Handlungsempfehlungen aufzuzeigen oder diese bei einer zu planenden Flugroute zu berücksichtigen. Bei der Aufnahme der Strahlungsdaten der atmosphärischen Strahlung können insbesondere hochenergetische, ionisierende Strahlungsanteile ermittelt werden.

Unter flugrelevanten Parametern im Rahmen der Erfindung werden beispielsweise Treibstoffmengen bzw. Treibstoffreserve, evtl. vorgegebene Flugzeiten, Treibstoffverbrauch, Wetterdaten oder Ähnliches, aber auch wirtschaftliche Faktoren verstanden.

In einem Ausführungsbeispiel des erfindungsgemäßen Verfahrens ist vorgesehen, dass in Schritt d) die flugrelevanten Parameter vor einem Flug zur Berechnung einer gegenüber einer herkömmlichen Flugroute alternativen Flugroute in Schritt e) übermittelt werden. Mit anderen Worten: Das erfindungsgemäße Verfahren kann vorsehen, dass bereits bei Erstellung einer Flugroute vor dem Start des in Schritt c) erstellten Modells berücksichtigt wird. Dadurch können nach einem Strahlendosis-relevanten Ereignis für einen bestimmten Zeitraum Flugrouten derart berechnet werden, dass eine Reduzierung einer Strahlungsexposition erfolgt. Dies kann beispielsweise erfolgen, indem eine Abwägung getroffen wird zwischen einem eventuell erhöhten Treibstoffverbrauch, was durch entsprechende Mehrbetankung des Flugzeuges berücksichtigt werden kann und der während des Fluges erfolgenden Strahlendosis. Die zu planende Flugroute kann somit in Bezug auf wirtschaftliche und gesundheitsrelevante Aspekte optimiert werden.

Das erfindungsgemäße Verfahren kann auch vorsehen, dass in Schritt d) die flugrelevanten Parameter von einem sich im Flug befindlichen Flugzeug zur Berechnung einer Ausweichroute als alternative Flugroute in Schritt e) übermittelt werden. Das erfindungsgemäße Verfahren ist somit auch für bereits im Flug befindliche Flugzeuge geeignet, wobei unter Berücksichtigung des Restflugweges sowie der Treibstoffmenge, dem ladungsabhängigen Treibstoffverbrauch und Wetterdaten eine mit diesen Randbedingungen mögliche Ausweichroute berechnet wird, um eine Reduzierung einer Strahlungsexposition zu erreichen. Es wird somit berechnet, ob die in dem Flugzeug befindliche Resttreibstoffmenge bzw. Treibstoffreserve ausreichend ist, um beispielsweise ein Ausweichen um den Bereich mit erhöhter Strahlungsintensität oder beispielsweise eine niedrigere Flughöhe möglich ist.

Vorzugsweise ist vorgesehen, dass die Strahlungsdaten mittels an unterschiedlichen geografischen Positionen angeordneten Messstationen, vorzugsweise Neutronenmonitore, und/oder mittels in Verkehrsflugzeugen installierten Messstationen ermittelt werden.

Die an unterschiedlichen geografischen Positionen angeordneten Messstationen ermöglichen es, in vorteilhafter Weise Strahlungsdaten zu erhalten, die eine Abschätzung der räumlichen Lage eines Bereichs mit durch das Strahlendosis-relevante Ereignis erhöhter Strahlungsintensität ermöglichen, da durch die unterschiedlichen geografischen Positionen festgestellt werden kann, in welchen Bereichen eine erhöhte Strahlungsintensität vorliegt. Insbesondere bei Strahlendosis-relevanten Ereignissen in Form von Strahlungsausbrüchen auf der Sonne sind die an unterschiedlichen geografischen Positionen angeordneten Messstationen von Vorteil, da über diese Messstationen die hoch energetischen Teilchen der Strahlung, die die gesamte Atmosphäre durchdrungen haben, ermittelt werden können. Darüber hinaus sind Strahlungsausbrüche auf der Sonne anisotrop, wobei über die mittels der Messstationen ermittelten Strahlungsdaten in vorteilhafter Weise auf das Energiespektrum der primär einfallenden Strahlung und die räumliche Lage des Bereichs mit erhöhter Strahlungsintensität geschlossen werden kann.

Durch das Vorsehen von Messstationen in Verkehrsflugzeugen können in vorteilhafter Weise Strahlungsdaten in der Reiseflughöhe aufgenommen werden, wodurch beispielsweise die mittels der an unterschiedlichen geografischen Positionen auf dem Erdboden angeordneten Messstationen ermittelten Daten ergänzt oder verifiziert werden können.

Dadurch ist eine Ermittlung von Strahlungsdaten, die für die Erstellung des Modells in Verfahrensschritt c) dienen, in besonders vorteilhafter Weise möglich.

Vorzugsweise ist vorgesehen, dass in Schritt a) zusätzlich Strahlungsdaten aus dem atmosphärennahen Bereich ermittelt werden, wobei die Ermittlung über satellitengestützte Messinstrumente erfolgt. Mittels der satellitengestützten Messinstrumente können auch Strahlungsdaten von niedrig-energetischen Strahlungsanteilen, die die Atmosphäre nicht durchdringen würden, ermittelt werden, so dass ein Rückschluss auf das Energiespektrum der Teilchen des Strahlendosis-relevanten Ereignisses in sehr genauer Weise möglich ist.

In einem Ausführungsbeispiel der Erfindung ist vorgesehen, dass in Schritt a) Strahlungsdaten in Form von Datensätzen mit einem zeitlichen Abstand t ermittelt werden, wobei die Datensätze Strahlungsdaten eines vorbestimmten Zeitraums enthalten. Insbesondere kann vorgesehen sein, dass die Datensätze die Strahlungsdaten seit der Ermittlung des vorangegangenen Datensatzes enthalten, mit anderen Worten: der vorbestimmte Zeitraum entspricht dem zeitlichen Abstand zwischen der Ermittlung zweier aufeinanderfolgender Datensätze. Da Strahlungsdaten häufig als Zählraten ermittelt werden, ermöglicht das erfindungsgemäße Verfahren somit, dass die Datensätze aussagekräftige Strahlungsdaten enthalten und die zu verarbeitende Datenmenge gering gehalten wird. Ein zeitlicher Abstand von etwa 5 Minuten hat sich als besonders vorteilhaft erwiesen, da in einem derartigen Zeitraum ausreichend Daten über die Strahlung ermittelt werden können, um Aussagen über das Energiespektrum treffen zu können.

Dabei kann insbesondere vorgesehen sein, dass in Schritt b) die Strahlungsdaten in Bezug auf einen Schwellenwert überprüft werden und bei Überschreitung des Schwellenwertes in einer vorgegebenen Anzahl von aufeinanderfolgenden Datensätzen auf ein Strahlendosis-relevantes Ereignis geschlossen wird.

Es hat sich herausgestellt, dass bei beispielsweise drei aufeinanderfolgenden Datensätzen, deren Strahlungsdaten einen Schwellenwert überschreiten, mit hoher Zuverlässigkeit auf ein Strahlendosis-relevantes Ereignis, wie beispielsweise ein Strahlungsausbruch auf der Sonne, geschlossen werden kann. Anhand dieser und nachfolgender Datensätze kann dann in Verfahrensschritt c) das Modell erstellt werden.

Dabei kann insbesondere vorgesehen sein, dass in Schritt c) das Modell nach aufnahme einer vorgegebenen Anzahl von Datensätzen erstellt wird. Die für den Schluss auf ein Strahlendosis-relevantes Ereignis genutzte Anzahl von aufeinanderfolgenden Datensätzen ist zumeist noch nicht ausreichend, um in Verfahrensschritt c) das Modell in zuverlässiger Weise zu erstellen. Dabei werden nachfolgende Datensätze ermittelt und erst dann das Modell erstellt. Mit anderen Worten: Die Anzahl von Datensätzen zur Erstellung des Modells ist größer als die Anzahl der aufeinanderfolgenden Datensätze, die einen Schluss auf ein Strahlendosis-relevantes Ereignis zulassen. Es hat sich herausgestellt, dass bereits nach einer halben Stunde oder sechs Datensätzen, die jeweils mit einem Abstand von 5 Minuten ermittelt worden sind, ein Modell in zuverlässiger Weise erstellt werden kann.

In einem bevorzugten Ausführungsbeispiel der Erfindung ist vorgesehen, dass nach Erstellen des Modells in Verfahrensschritt c) der Verfahrensschritt a) wiederholt durchgeführt wird und das Modell anhand der zusätzlich aufgenommenen Strahlungsdaten angepasst wird. Vorzugsweise wird das Modell kontinuierlich anhand der zusätzlich aufgenommenen Strahlungsdaten angepasst. Mit anderen Worten: Das Modell kann nach Erstellung durch die zusätzlich aufgenommenen Strahlungsdaten verifiziert oder angepasst bzw. verbessert werden. Somit wird das Modell zunehmend genauer und verbessert. Dabei kann vorgesehen sein, dass in Verfahrensschritt e) eine Berechnung weiterer Flugrouten anhand des angepassten Modells erfolgt. Die zu einem späteren Zeitpunkt zu berechnenden Flugrouten können somit anhand des wesentlich genaueren Modells erfolgen. Selbstverständlich ist es auch möglich, dass die bereits berechneten bzw. angepassten Flugrouten anhand des genauer werdenden Modells erneut angepasst werden.

Das erfindungsgemäße Verfahren ermöglicht somit, dass aus dem Modell auf Basis der Messdaten und der Flugzeugparameter eine Dosisabschätzung entlang der verbleibenden Flugroute ermittelt wird und in quasi Echtzeit Handlungsoptionen unter Berücksichtigung vorgegebener Nebenbedingungen wie die flugrelevanten Parameter sowie die Reduzierung einer Strahlungsexposition bereit gestellt werden können.

Das erfindungsgemäße Verfahren kann vorsehen, dass das Modell ein dynamisches Modell ist, das quantitative Informationen bezüglich der Strahlungsintensität und deren zeitlichen Veränderungen enthält. Es hat sich herausgestellt, dass beispielsweise bei einem Strahlungsausbruch auf der Sonne die höchste Strahlungsintensität bereits am Anfang des Ereignisses entsteht und die zeitliche Veränderung in einer Abnahme der Strahlungsintensität besteht. Daher lässt sich mit dem Modell in vorteilhafter Weise ermitteln, wie die zukünftige Entwicklung der Strahlungsintensität in dem Bereich mit einer durch das Strahlendosis-relevante Ereignis erhöhten Strahlungsintensität verhält. Auf diese Weise lassen sich die Flugrouten in Bezug auf eine Reduzierung einer Strahlungsexposition in besonders vorteilhafter Weise anpassen. Beispielsweise kann durch die zeitliche Vorhersage die Flugroute durch ein Gebiet, das zum jetzigen Zeitpunkt noch eine unerwünscht hohe Strahlungsintensität besitzt, jedoch zum Zeitpunkt, wenn das Flugzeug dieses Gebiet durchkreuzt, bereits eine akzeptable Strahlungsintensität enthält, berücksichtigt werden.

In einem Ausführungsbeispiel der Erfindung sieht das erfindungsgemäße Verfahren vor, dass in Schritt c) bei der Erstellung des Modells aus den Strahlungsdaten auf ein Energiespektrum der Teilchen des Strahlendosis-relevanten Ereignisses geschlossen wird.

Die räumliche und zeitliche Abschätzung der Strahlungsintensität aufgrund von Strahlendosis-relevanten Ereignissen können beispielsweise auf Grundlage der in der Dissertation "The radiation environment in the lower atmosphere - A numerical approach", Christian Albrechts Universität zu Kiel, 2009, von Daniel Matthiä beschriebenen Erkenntnisse erfolgen.

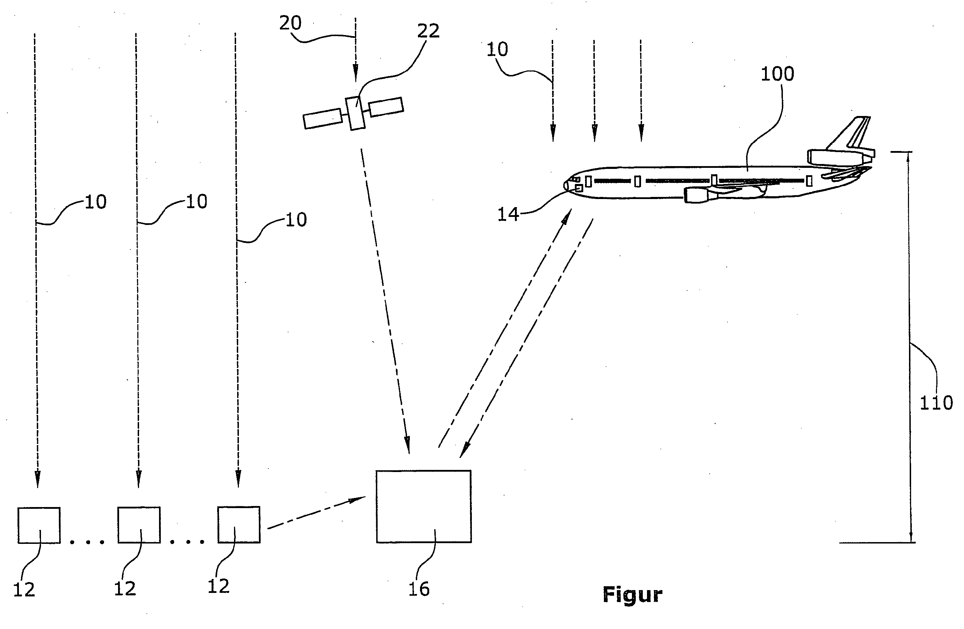

Im Folgenden wird unter Bezugnahme auf die einzige Figur die Erfindung näher erläutert.

In der einzigen Figur ist die Funktion des erfindungsgemäßen Verfahrens schematisch dargestellt.

Das erfindungsgemäße Verfahren dient zur Flugberechnung von Flugzeugen 100 unter Berücksichtigung von Strahlendosis-relevanten Ereignissen. Dabei soll insbesondere eine zusätzliche dosisrelevante Strahlungskomponente auf der Reiseflughöhe 110 des Flugzeugs 100 ermittelt bzw. vorhergesagt werden.

Das erfindungsgemäße Verfahren sieht vor, dass zunächst Strahlungsdaten der atmosphärischen Strahlung 10 ermittelt werden. Dazu können beispielsweise an unterschiedlichen geografischen Positionen auf dem Boden angeordnete Messstationen 12 dienen. Diese Messstationen 12, die beispielsweise als Neutronenmonitore ausgebildet sein können, ermitteln insbesondere hoch energetische Strahlungsanteile, die die gesamte Atmosphäre bis zur Erdoberfläche durchdringen. Zusätzlich können für Aufnahmen der Strahlungsdaten der atmosphärischen Strahlung 10 in den Flugzeugen 100 angeordnete Messstationen 14 sein, die somit direkt die Strahlung in der Reiseflughöhe 110 ermitteln. Die aufgenommenen Strahlungsdaten werden an eine zentrale Station 16 übermittelt und beispielsweise mittels eines Rechners ausgewertet. Die Datenübermittlung ist durch die Pfeile in der Figur dargestellt. Die Strahlungsdaten werden in Form von Datensätzen mit einem zeitlichen Abstand t ermittelt, wobei die Datensätze Strahlungsdaten des Zeitraumes seit der letzten Datensatzermittlung beinhalten.

Die Strahlungsdaten werden in Bezug auf einen Schwellenwert überprüft, wobei bei Überschreitung des Schwellenwertes von beispielsweise drei aufeinanderfolgenden Datensätzen auf ein Strahlendosis-relevantes Ereignis, wie beispielsweise ein Strahlungsausbruch auf der Sonne, geschlossen wird.

Anschließend werden weitere Datensätze von Strahlungsdaten ermittelt, wobei nach Aufnahme von beispielsweise sechs Datensätzen aus den Strahlungsdaten ein Modell erstellt wird, das eine Abschätzung der räumlichen Lage eines Bereichs mit durch das Strahlendosis-relevante Ereignis erhöhter Strahlungsintensität umfasst. Das Modell kann ferner quantitative Informationen bezüglich der Strahlungsintensität enthalten und eine zeitliche Veränderung der Strahlungsintensität in dem Bereich mit erhöhter Strahlungsintensität vorhersagen.

Ferner werden flugrelevante Parameter von dem Flugzeug 100 an die zentrale Station 16 übermittelt. Anhand des Modells und der flugrelevanten Parameter, die beispielsweise Treibstoffmenge bzw. Treibstoffreserve, maximale tolerierte Strahlungsexposition, Flugdauer sowie beispielsweise Wetterdaten umfassen können, wird eine neue Flugroute ermittelt, die im Vergleich zu der bisher gewählten Flugroute eine geringere Strahlungsexposition bewirkt. Dabei wird insbesondere darauf geachtet, dass die neu gewählte Flugroute mit den flugrelevanten Parametern, insbesondere mit der Resttreibstoffmenge, überhaupt durchführbar ist. Die neu ermittelte Flugroute wird anschließend von der zentralen Station 16 an das Flugzeug 100 übermittelt und dem Flugzeugführer als Handlungsoption aufgezeigt.

Über die aufgenommenen Strahlungsdaten wird bei der Erstellung des Modells beispielsweise auf das Energiespektrum der Teilchen des Strahlendosis-relevanten Ereignisses geschlossen.

Neben den Strahlungsdaten der atmosphärischen Strahlung 10, die mit den Messstationen 12 und den in den Verkehrsflugzeugen 100 installierten Messstationen 14 ermittelt werden, können zusätzlich Strahlungsdaten von Strahlung 20 im atmosphärennahen Bereich ermittelt werden, wobei dies über satellitengestützte Messinstrumente 22 erfolgt. Diese zusätzlichen Strahlungsdaten werden ebenfalls an die zentrale Station 16 übermittelt und bei der Erstellung des Modells berücksichtigt. Dadurch kann das Modell wesentlich genauer erstellt werden, da im atmosphärennahen Bereich auch niederenergetische Strahlung ermittelt werden kann, die mit den am Boden angeordneten Messstationen 12 nicht messbar ist. Durch die Strahlungsdaten aus dem atmosphärennahen Bereich ist ein genauerer Rückschluss auf das Energiespektrum der Teilchen des Strahlendosis-relevanten Ereignisses möglich, so dass ein wesentlich genaueres Modell erstellt werden kann.

Das erfindungsgemäße Verfahren kann ferner vorsehen, dass das erstellte Modell kontinuierlich durch die Aufnahme weiterer Strahlungsdaten verbessert bzw. angepasst wird. Die berechnete Flugroute kann ebenfalls kontinuierlich an das Modell angepasst werden, so dass quasi in Echtzeit Flugrouten an das Flugzeug 100 übermittelt werden können.

Das Modell kann somit ein dynamisches Modell sein, das die Entwicklung des Bereichs mit einer durch das Strahlendosis-relevante Ereignis erhöhten Strahlungsintensität beschreibt.

Selbstverständlich ist es auch möglich, dass mit dem erfindungsgemäßen Verfahren Flugrouten von Flugzeugen, die noch nicht in der Luft sind, berechnet werden. Es können somit gegenüber bereits erstellten oder zu erstellenden Routen alternative Flugroutenvorschläge ermittelt werden, die das Strahlendosis-relevante Ereignis berücksichtigen. Die neu berechneten Flugrouten können anhand der geplanten flugrelevanten Parameter erfolgen. Selbstverständlich ist es auch möglich, dass die flugrelevanten Parameter, wie beispielsweise die Treibstoffmenge, angepasst werden, um eine Flugroute mit reduzierter Strahlungsexposition zu ermöglichen. Die flugrelevanten Parameter sind selbstverständlich auch wirtschaftliche Parameter, so dass eine Abwägung zwischen der Reduzierung der Strahlungsexposition und wirtschaftlichen Gesichtspunkten erfolgen kann.

## Patentansprüche

1. Verfahren zur Flugroutenberechnung unter Berücksichtigung Strahlendosis-relevanter Ereignisse mit folgenden Schritten:
a) Aufnahme von Strahlungsdaten der atmosphärischen Strahlung (10),
b) Überprüfen der Strahlungsdaten und Schließen auf ein Strahlendosis-relevantes Ereignis, das eine temporäre Expositionserhöhung erzeugt,
c) Erstellen eines Modells anhand der Strahlungsdaten, wobei das Modell zumindest eine Abschätzung der räumlichen Lage eines Bereichs mit einer durch das Strahlendosis-relevante Ereignis erhöhten Strahlungsintensität enthält,
d) Ermittlung von flugrelevanten Parametern,
e) Berechnung einer in Hinblick auf die flugrelevanten Parameter möglichen Flugroute unter Berücksichtigung des in Schritt c) erstellten Modells, wobei die Flugroute in Bezug auf eine Reduzierung einer Strahlungsexposition angepasst wird.

2. Verfahren nach Anspruch 1, **dadurch gekennzeichnet, dass** in Schritt d) die flugrelevanten Parameter vor einem Flug zur Berechnung einer gegenüber einer herkömmlichen Flugroute alternativen Flugroute in Schritt e) ermittelt werden.

3. Verfahren nach Anspruch 1, **dadurch gekennzeichnet, dass** in Schritt d) die flugrelevanten Parameter von einem sich im Flug befindlichen Flugzeug zur Berechnung einer Ausweichroute als alternative Flugroute in Schritt e) übermittelt werden.

4. Verfahren nach einem der Ansprüche 1 bis 3, **dadurch gekennzeichnet, dass** die Strahlungsdaten mittels an unterschiedlichen geografischen Positionen angeordneten Messstationen, vorzugsweise Neutronenmonitore, und/oder mittels in Verkehrsflugzeugen (100) installierten Messstationen (14) ermittelt werden.

5. Verfahren nach einem der Ansprüche 1 bis 4, **dadurch gekennzeichnet, dass** in Schritt a) zusätzlich Strahlungsdaten aus dem atmosphärennahen Bereich ermittelt werden, wobei die Ermittlung über satellitengestützte Messinstrumente (22) erfolgt.

6. Verfahren nach einem der Ansprüche 1 bis 5, **dadurch gekennzeichnet, dass** in Schritt a) Strahlungsdaten in Form von Datensätzen mit einem zeitlichen Abstand (t) ermittelt werden, wobei die Datensätze Strahlungsdaten eines vorbestimmten Zeitraumes enthalten.

7. Verfahren nach Anspruch 6, **dadurch gekennzeichnet, dass** in Schritt b) die Strahlungsdaten in Bezug auf einen Schwellenwert überprüft werden und bei Überschreitung des Schwellenwertes in einer vorgegebenen Anzahl von aufeinanderfolgenden Datensätzen auf ein Strahlendosis-relevantes Ereignis geschlossen wird.

8. Verfahren nach Anspruch 6 oder 7, **dadurch gekennzeichnet, dass** in Schritt c) das Modell nach Aufnahme einer vorgegebenen Anzahl von Datensätzen erstellt wird.

9. Verfahren nach einem der Ansprüche 1 bis 8, **dadurch gekennzeichnet, dass** nach Erstellen des Modells in Verfahrensschritt c) der Verfahrensschritt a) wiederholt durchgeführt wird und das Modell vorzugsweise kontinuierlich anhand der zusätzlich aufgenommenen Strahlungsdaten angepasst wird.

10. Verfahren nach Anspruch 9, **dadurch gekennzeichnet, dass** in Verfahrensschritt e) eine Berechnung weiterer Flugrouten anhand des angepassten Modells erfolgt.

11. Verfahren nach einem der Ansprüche 1 bis 10, **dadurch gekennzeichnet, dass** das Modell ein dynamisches Modell ist, das quantitative Information bezüglich der Strahlungsintensität und deren zeitliche Veränderung enthält.

12. Verfahren nach einem der Ansprüche 1 bis 11, **dadurch gekennzeichnet, dass** in Schritt c) bei der Erstellung des Modells aus den Strahlungsdaten auf ein Energiespektrum der Teilchen des Strahlendosis-relevanten Ereignisses geschlossen wird.

## Claims

1. A method for the calculation of flight paths taking into consideration events of relevance for the radiation dose, comprising the following steps:
a) collection of radiation data of the atmospheric radiation (10),
b) examination of the radiation data and conclusion about an event of relevance for the radiation dose that generates a temporary increase in exposure,
c) creation of a model using the radiation data, the model containing at least an estimate of the spatial location of a region with a radiation intensity increased by the event of relevance for the radiation dose,
d) determination of flight-relevant parameters,
e) calculation of a possible flight path in view of the flight-relevant parameters taking into consideration the model created in step c), the flight path being adjusted in respect of a reduction of an exposure to radiation.

2. The method according to claim 1, **characterized in that**, in step d), the flight-relevant parameters are determined before a flight, for calculation of a flight path as an alternative to a conventional flight path in step e).

3. The method according to claim 1, **characterized in that**, in step d), the flight-relevant parameters of an aircraft in flight are determined for calculation of a bypass route as an alternative flight path in step e).

4. The method according to any one of claims 1 to 3, **characterized in that** the radiation data are determined by measurement stations, preferably neutron monitors, arranged at different geographic positions, and/or by measurement stations (14) installed in commercial aircraft (100).

5. The method according to any one of claims 1 to 4, **characterized in that**, in step a), there are additionally determined radiation data from the near-atmospheric region, this detection being performed by satellite-based measurement instruments (22).

6. The method according to any one of claims 1 to 5, **characterized in that**, in step a), radiation data in the form of data sets are determined at a temporal interval (t), said data sets including radiation data of a predefined period of time.

7. The method according to claim 6, **characterized in that**, in step b), the radiation data are examined with respect to a threshold value and, when the threshold value is exceeded in a predetermined number of consecutive data sets, a conclusion is drawn on an event of relevance for the radiation dose.

8. The method according to claim 6 or 7, **characterized in that**, in step c), the model is created after acquisition of a predetermined number of data sets.

9. The method according to any one of claims 1 to 8, **characterized in that**, after creation of the model in method step c), said method step a) is repeated and the model is continuously adapted on the basis of the additionally included radiation data.

10. The method according to claim 9, **characterized in that**, in method step e), a calculation of further flight paths is performed on the basis of the adapted model.

11. The method according to any one of claims 1 to 10, **characterized in that** said model is a dynamic model which includes quantitative information about the radiation intensity and its variation over time.

12. The method according to any one of claims 1 to 11, **characterized in that**, in step c) in the creating of the model, there is drawn a conclusion from the radiation data to an energy spectrum of the particles of the event of relevance for the radiation dose.

## Revendications

1. Procédé de calcul d'un itinéraire de vol tenant compte d'événements significatifs en matière de doses de rayonnement, et comprenant les étapes suivantes :
a) l'enregistrement de données de rayonnement relatives aux rayonnements atmosphériques (10) ;
b) le contrôle des données de rayonnement et la déduction d'un événement significatif pour les doses de rayonnement, qui produit un accroissement temporaire de l'exposition ;
c) l'élaboration d'un modèle à l'aide des données de rayonnement, le modèle contenant tout au moins une estimation de la position spatiale d'une zone présentant une intensité de rayonnement accrue du fait de l'événement significatif pour les doses de rayonnement ;
d) la détermination des paramètres significatifs pour le vol ;
e) le calcul d'un itinéraire de vol possible au regard des paramètres significatifs pour le vol, en tenant compte du modèle élaboré à l'étape c), l'itinéraire de vol étant adapté en vue d'une réduction de l'exposition aux rayonnements.

2. Procédé selon la revendication 1, **caractérisé en ce que** les paramètres significatifs pour le vol déterminés à l'étape d) sont définis dans l'étape e) avant un vol, en vue de calculer un itinéraire de vol alternatif par rapport à l'itinéraire de vol traditionnel.

3. Procédé selon la revendication 1, **caractérisé en ce que** les paramètres significatifs pour le vol déterminés à l'étape d) sont transmis dans l'étape e) par un avion se trouvant en vol, en vue de calculer un itinéraire de contournement en tant qu'itinéraire de vol alternatif.

4. Procédé selon l'une des revendications 1 à 3, **caractérisé en ce que** les données de rayonnement sont calculées au moyen de stations de mesure, de préférence des moniteurs à neutrons, disposées en différents emplacements géographiques et/ou au moyen de stations de mesure (14) mises en place dans des avions de ligne (100).

5. Procédé selon l'une des revendications 1 à 4, **caractérisé en ce que** des données de rayonnement sont en outre calculées dans l'étape a), à partir de la zone proche de l'atmosphère, la détermination proprement dite ayant lieu par l'intermédiaire d'instruments de mesure (22) assistés par des satellites.

6. Procédé selon l'une des revendications 1 à 5, **caractérisé en ce que** des données de rayonnement sont calculées dans l'étape a) sous la forme de jeux de données avec un'intervalle (t) dans le temps, les jeux de données contenant des données de rayonnement d'une période de temps prédéterminée.

7. Procédé selon la revendication 6, **caractérisé en ce que** les données de rayonnement sont vérifiées dans l'étape b) en vue de la détermination d'une valeur seuil et **en ce qu'**un événement significatif pour les doses de rayonnement en est déduit en cas de dépassement de la valeur seuil dans un nombre prédéfini de jeux de données consécutifs.

8. Procédé selon la revendication 6 ou 7, **caractérisé en ce que** le modèle est élaboré dans l'étape c) après l'enregistrement d'un nombre prédéfini de jeux de données.

9. Procédé selon l'une des revendications 1 à 8, **caractérisé en ce qu'**après l'élaboration du modèle dans la phase de procédé c), la phase de procédé a) est de nouveau exécutée et le modèle est adapté, de préférence en continu, à l'aide des données de rayonnement enregistrées en sus.

10. Procédé selon la revendication 9, **caractérisé en ce qu'**un calcul d'autres itinéraires de vol a lieu dans la phase de procédé e) à l'aide du modèle ajusté.

11. Procédé selon l'une des revendications 1 à 10, **caractérisé en ce que** le modèle est un modèle dynamique qui contient des informations quantitatives relatives à l'intensité de rayonnement et à leur évolution dans le temps.

12. Procédé selon l'une des revendications 1 à 11, **caractérisé en ce qu'**un spectre d'énergie des particules de l'événement significatif pour les doses de rayonnement en est déduit dans l'étape c), à partir des données de rayonnement, lors de l'élaboration du modèle.
